# EUROPÄISCHE PATENTSCHRIFT

(11) **EP 1 248 815 B1**
(45) Veröffentlichungstag und Bekanntmachung des Hinweises auf die Patenterteilung: **25.08.2004**
(21) Anmeldenummer: 00990535.7
(22) Anmeldetag: 14.12.2000
(51) Int. Cl.: C08K 3/40, C03C 14/00, C08J 3/20

(54) **MEDIENDICHTE KONTAKTDURCHFÜHRUNGEN**
SEALED CONTACT BUSHINGS
TRAVERSEES DE CONTACT ETANCHES

(30) Priorität: 15.12.1999 DE 19960549
(43) Veröffentlichungstag der Anmeldung: 16.10.2002
(73) Patentinhaber: SIEMENS AKTIENGESELLSCHAFT, 80333 München (DE)
(72) Erfinder: OCHSENKÜHN, Manfred, 92348 Berg (DE); GREINER, Robert, 91083 Baiersdorf (DE); POLESE, Angelo, 10557 Berlin (DE)
(86) Internationale Anmeldenummer: PCT/DE2000/004463
(87) Internationale Veröffentlichungsnummer: WO 2001/044361

(56) Entgegenhaltungen:
- EP-A- 0 365 236
- EP-A- 0 773 196
- DATABASE WPI Section Ch, Week 199826 Derwent Publications Ltd., London, GB; Class A60, AN 1998-291893 XP002164143 & JP 10 101364 A (ASAHI GLASS CO LTD), 21. April 1998 (1998-04-21)

## Beschreibung

Die Erfindung betrifft mediendichte Kontaktdurchführungen bei Kunststoffbauteilen.

Für mediendichte Kontaktdurchführungen bei Gehäusen und Umhüllungen von elektrischen und elektronischen Bauteilen, wie Steckverbinder, Sensoren, optoelektronische Bauelemente und Relais, werden bislang unterschiedliche Werkstoffe eingesetzt. So dient beispielsweise meistens ein thermoplastischer Werkstoff zur Formgebung, während bei einem nachfolgenden Vergießprozess ein Duroplast-Material verwendet wird, um die geforderte Dichtigkeit und auch die Hitzebeständigkeit des geformten Gegenstandes zu erreichen.

Eine weitere Möglichkeit besteht in der Verwendung von thermoplastischen "Hart-Weich-Systemen", die beispielsweise durch eine Zweikomponenten-Spritzgießtechnik hergestellt werden. Dabei werden mit der "Hart-Komponente" die Funktionsflächen, beispielsweise Gehäuse, erzeugt, während die "Weich-Komponente", die beispielsweise ein thermoplastisches Elastomer ist, die Dichtfunktion nach dem O-Ring-Prinzip übernimmt (siehe beispielsweise: "Kunststoffe" Bd. 88 (1998), Seiten 207 und 208). Ferner wurde auch versucht, eine Dichtfunktion dadurch zu erreichen, dass auf die metallischen Durchführungen Haftvermittler aufgebracht werden oder dass die Kunststoff- und Metalloberflächen aktiviert werden, beispielsweise durch eine Plasmabehandlung.

Der Nachteil dieser Vorgehensweisen besteht in einem hohen Prozessaufwand, der in der Vielzahl der Verfahrensschritte begründet ist. Außerdem bedingt die Verwendung unterschiedlicher Werkstoffe eine nicht unerhebliche Sortenvielfalt, was mit hohen Kosten für das Material, beispielsweise bei Beschaffung und Lagerung, sowie für die Entsorgung verbunden ist. Trotz des erheblichen Aufwandes werden aber hinsichtlich der Dichtigkeit oft nur unzureichende Ergebnisse erzielt.

Aus der EP-A 773 196 ist ein dreifaches Hybrid aus einem Glas/Kunststoff bekannt, wobei zumindest zwei polymer vorliegende Kunststoffe mit einem Glas hybridisiert werden. Diese Materialien sind aufwendig herzustellen.

Aufgabe der Erfindung ist es, mediendichte Kontaktdurchführungen bei Kunststoffbauteilen derart auszugestalten, dass die Dichtigkeit mit Sicherheit gewährleistet ist und dass sie in einfacher Weise und kostengünstig herstellbar sind.

Dies wird erfindungsgemäß durch Kontaktdurchführungen erreicht, die aus einem Glas/Kunststoff-Compound auf Thermoplastbasis bestehen, der
- ein niedrigschmelzendes Sulfophosphatglas folgender Zusammensetzung (in Mol-%): 4 bis 10 % Li₂O, 4 bis 10 % Na₂O, 4 bis 8 % K₂O, 1 bis 2 % CaO, 35 bis 37 % ZnO, 0 bis 3 % La₂O₃, 19 bis 22 % P₂O₅ und 19 bis 22 % SO₃ sowie
- einen Hochleistungsthermoplast
enthält.

Durch die Verwendung des speziellen Glas/Kunststoff-Compounds aus einem niedrigschmelzenden Sulfophosphatglas und einem Hochleistungsthermoplast wird eine stoffschlüssige Verbindung zwischen den Kontaktdurchführungen und dem Compound erreicht und damit eine mediendichte Verbindung hergestellt. Dabei ist von Vorteil, dass dies in einem einzigen Arbeitsschritt erfolgt. Aufgrund der Tatsache, dass der Compound, d.h. sowohl das Glas als auch der Kunststoff, bei der Verarbeitungstemperatur im Schmelzzustand vorliegt, erfolgt eine gute Benetzung der Metallkontakte durch die Glasphase und es kommt zu einer ausgeprägten adhäsiven Anbindung des Glases an die Kontaktdurchführungen.

Die Glasschmelze unterscheidet sich vom erstarrten Glas auch durch die Beschaffenheit ihrer Oberfläche. Während sich die aktiven polaren Endgruppen eines erstarrten Glases z.B. mit Hydroxygruppen des in der Umgebungsluft immer vorhandenen Wassers absättigen und damit ihre Aktivität verlieren, liegen in der Glasschmelze noch die freien und aktiven Endgruppen vor, die, bei Kontakt mit z.B. Metall oder Kunststoff, mit der Metall- und/oder Kunststoffoberfläche in Wechselwirkung treten und dadurch eine gute Benetzung und/oder Anbindung an diese bewirken.

Unter einem "niedrigschmelzenden" Sulfophosphatglas wird ein Glas mit niedriger Glasübergangstemperatur T_{g} verstanden, insbesondere ein Glas mit T_{g} < ca. 500°C. Ein "Hochleistungsthermoplast" ist ein Hochleistungskunststoff ("high-performance polymer"), und zwar im vorliegenden Fall ein hochtemperaturbeständiger Kunststoff ("heat-resistant polymer", "high-temperature resistant polymer"). Dies ist deshalb wichtig, weil sowohl die Temperatur bei der Herstellung des Compounds als auch die Verarbeitungstemperatur (des Compounds) > 300°C beträgt.

Das im Glas/Kunststoff-Compound enthaltene Sulfophosphatglas besitzt eine Glasübergangstemperatur im Bereich von 250 bis 280°C; bei der Verarbeitungstemperatur liegt es deshalb im fließfähigen Zustand vor. Vorzugsweise weist der Compound ein Sulfophosphatglas folgender Zusammensetzung auf (in Mol-%): 4,9 % Li₂O, 9,4 % Na₂O, 7,1 % K₂O, 1,6 % CaO, 36,6 % ZnO, 20,0 % P₂O₅ und 20,4 % SO₃. Ein derartiges Glas besitzt eine Glasübergangstemperatur von 268°C. Ein anderes Glas weist beispielsweise folgende Zusammensetzung auf (in Mol-%): 9 % Li₂O, 5 % Na₂O, 7 % K₂O, 1,6 % CaO, 37 % ZnO, 20, 4 % P₂O₅ und 20 % SO₃ (T_{g} = 280°C). Ein weiteres Glas hat beispielsweise folgende Zusammensetzung (in Mol-%): 4,8 % Li₂O, 9,2 % Na₂O, 6,9 % K₂O, 1,6 % CaO, 35,9 % ZnO, 2,0 % La₂O₃, 19, 6 % P₂O₅ und 20,0 % SO₃ (T_{g} = 275°C).

Als Hochleistungsthermoplast enthält der Glas/Kunststoff-Compound vorzugsweise eines der folgenden Polymere: ein Polyetheretherketon (PEEK), ein Polyetherimid (PEI), ein Polyphenylensulfid (PPS), ein teilaromatisches Polyamid, wie Polyphthalamid (PPA), oder ein flüssigkristallines Polymer (LCP). Bei diesen Polymeren ist die Glasübergangstemperatur der Glaskomponente der Verarbeitungstemperatur des Thermoplastmaterials angepasst. Weitere einsetzbare Hochleistungsthermoplaste sind Polyaryletherketone (PAEK) allgemein, beispielsweise Polyetherketone (PEK), sowie Polysulfone (PSU), insbesondere Polyethersulfone (PES) und Polyphenylensulfone (PPSU).

Der Anteil des Compounds an der Glaskomponente, d.h. am Sulfophosphatglas, beträgt im allgemeinen 15 bis 80 Gew.-%, vorzugsweise 25 bis 60 Gew.-%. Die Verarbeitungstemperatur des Compounds liegt bei etwa 320 bis 420°C. Trotz des hohen Glasanteils besitzt der Compound eine hohe Fließfähigkeit, so dass damit auch komplizierte und filigrane Bauteile mit Kontaktdurchführungen realisiert werden können.

Die Herstellung des Glas/Kunststoff-Compounds erfolgt vorteilhaft beispielsweise derart, dass aus den beiden Komponenten, d.h. Sulfophosphatglas und Hochleistungsthermoplast, zunächst - bei erhöhter Temperatur (vorzugsweise etwa 320 bis 420°C) - ein Masterbatch mit einem Glasgehalt von 60 bis 90 Gew.-% hergestellt wird. Dabei wurde überraschenderweise gefunden, dass bei der Verwendung von Glasparzikeln (Glaskörner) mit einem Durchmesser ≤ 1,5 mm im Masterbatch Glasstrukturen im µm- und sub-µm-Bereich erhalten werden, die gleichmäßig verteilt sind.

Die Weiterverarbeitung erfolgt dann in der Weise, dass durch Zugabe von weiterem Hochleistungsthermoplast zum Masterbatch - bei erhöhter Temperatur (vorzugsweise etwa 320 bis 420°C) - der Glasgehalt beispielsweise auf 25 bis 60 Gew.-% verringert wird. Die Struktur und die homogene Verteilung der Glaspartikel werden dabei nicht beeinflusst, d.h. sie bleiben erhalten. Bei Kontrollexperimenten zeigte sich überraschenderweise, dass Strukturgröße und -verteilung der beschriebenen Art nicht erhalten werden, wenn unmittelbar von einem Batch beispielsweise mit einem Glasanteil von 15 % ausgegangen wird.

Gleichmäßig verteilte Glasstrukturen, sogar im nm-Bereich, lassen sich vielmehr nur ausgehend von einem Masterbatch mit einem hohen Anteil des speziellen Sulfophosphatglases in einem Hochleistungsthermoplast realisieren.

Wie bereits ausgeführt, liegt der Compound bei der Verarbeitungstemperatur im fließfähigen Zustand vor. Durch den Aufschmelzvorgang während der Verarbeitung wird stets eine neue, jungfräuliche Glasoberfläche erzeugt, die eine hohe Reaktivität besitzt. Der aufgeschmolzene Compound bzw. das aufgeschmolzene Glas zeigt eine ausgesprochen gute Adhäsionshaftung gegenüber den Kontaktdurchführungen, und es bildet sich - während der Urformung des Bauteils (durch Spritzgießen) - eine stoffschlüssige Verbindung zwischen Durchführung und Compound aus, die auch nach dem Abkühlen des Bauteils erhalten bleibt. Diese Verbindung zeigt außerdem eine hervorragende Temperaturwechselbeständigkeit.

Da bei den Kontaktdurchführungen nach der Erfindung der mediendichte Verbund beim Spritzen (Urformen) der Bauteile erzeugt wird, ergibt sich eine Einsparung an Fertigungsschritten. Außerdem sind keine Vor- und Nachbehandlungen erforderlich, und die Anzahl der eingesetzten Werkstoffe reduziert sich auf ein einziges Material, woraus sich nicht unerhebliche Kosteneinsparungen ergeben. Zusätzlich können - in einem späteren Arbeitsschritt - Anschlüsse dicht eingeschmolzen und positioniert werden oder auch direkt umspritzte Durchführungen nachträglich justiert werden, ohne dass die Dichtigkeit beeinflusst wird.

Die mediendichten Kontaktdurchführungen nach der Erfindung finden insbesondere bei Gehäusen und Umhüllungen folgender elektrischer bzw. elektronischer Bauteile Verwendung: Steckverbinder, Sensoren, optoelektronische Bauelemente, Relais, Pin-Durchführungen in Relaisgrundkörpern und Lead-frames.

Anhand von Ausführungsbeispielen soll die Erfindung noch näher erläutert werden. Das bei den Untersuchungen eingesetzte Sulfophosphatglas weist folgende Zusammensetzung auf (in Mol-%): 4,9 % Li₂O, 9,4 % Na₂O, 7,1 % K₂O, 1,6 % CaO, 36,6 % ZnO, 20,0 % P₂O₅ und 20,4 % SO₃.

### Beispiel 1

An Testkörpern, die aus einem umspritzten Metall-Einlegeteil bestehen, wird die Dichtheit geprüft. Verglichen werden dabei Testkörper mit einer Umspritzung aus einem Glas/Kunststoff-Compound auf der Basis von Polyphenylensulfid mit einem Anteil von 60 Gew.-% Sulfophosphatglas ("PPS+SPG60") bzw. aus einem handelsüblichen Polyphenylensulfid mit 40 Gew.-% Glasfasern ("PPS+GF40") bzw. aus einem handelsüblichen Polyphthalamid mit 33 Gew.-% Glasfasern ("PPA+GF33"), das vom Hersteller bereits auf die Haftung zu Metall optimiert ist.

Die Testkörper, bei denen das Einlegeteil aus versilbertem Kupfer besteht, werden unter folgenden Bedingungen hergestellt:

| | |
|---|---|
| Vorwärmtemperatur Einlegeteil | 160°C |
| Werkzeugtemperatur | 150°C |
| Massetemperatur PPS+SPG60 | 335°C |
| Massetemperatur PPS+GF40 | 330°C |
| Massetemperatur PPA+GF33 | 335°C |

Zur Prüfung werden die Testkörper in eine Druckapparatur eingebaut und mit Überdruck beaufschlagt. Als Druckübertragungsund Prüfmedium dient Wasser.
Es wird nach folgendem Programm geprüft:

| | |
|---|---|
| Prüfung 1 | 24 h nach Probekörperherstellung 3 min bei 1 bar, dann Druckerhöhung 3 min bei 2 bar |
| Dunk-Test | 140°C 30 min → Eiswasser 2 min (5 Zyklen) |
| Prüfung 2 | nach Dunk-Test 5 Zyklen 3 min bei 1 bar, dann Druckerhöhung 3 min bei 2 bar |
| Dunk-Test | 140°C 30 min → Eiswasser 2 min (5 Zyklen) |
| Prüfung 3 | nach Dunk-Test 10 Zyklen 3 min bei 1 bar, dann Druckerhöhung 3 min bei 2 bar |
| Prüfung 4 | weitere Druckerhöhung in 1 bar-Schritten 3 min bei 3 bar, 3 min bei 4 bar ... 3 min bei 10 bar (Ende) |

Die Ergebnisse der Dichtigkeitsprüfung sind in der nachfolgenden Tabelle zusammengefasst. Es zeigt sich, dass mit den Glas/Kunststoff-Compounds nach der Erfindung eine wesentlich bessere Dichtheit von Kunststoff/Metall-Verbundsystemen in einem einzigen Verarbeitungsschritt erreicht wird (d = dicht, u = undicht).

### Beispiel 2

Lead-frame-Bänder (Bandmaterial: versilbertes Kupfer) werden mit einem Glas/Kunststoff-Compound auf der Basis von Polyphenylensulfid mit einem Anteil von 40 Gew.-% Sulfophosphatglas ("PPS+SPG40") umspritzt. Die Versuche werden auf Serienwerkzeug unter Serienbedingungen durchgeführt:

| | |
|---|---|
| Vorwärmtemperatur Lead-frame-Band | 190°C |
| Werkzeugtemperatur | 190°C |
| Massetemperatur PPS+SPG40 | 330°C |

Zur Dichtheitsprüfung werden die umspritzten Bänder mit einer Kriechflüssigkeit beaufschlagt (Standardtest). Dabei konnte kein Eindringen von Kriechflüssigkeit in die Grenzfläche zwischen Lead-frame-Band und Umspritzung beobachtet werden. Dies stellt eine deutliche Verbesserung im Vergleich mit den Materialien PPS+GF40 und PPA+GF33 dar.

### Beispiel 3

Bei der Pin-Durchführung in einem Relaisgrundkörper (Pin-Material: Kupfer) dient als Grundkörper ein Glas/Kunststoff-Compound auf der Basis von Polyphenylensulfid mit einem Anteil von 40 Gew.-% Sulfophosphatglas ("PPS+SPG40"). Die Versuche werden auf Serienwerkzeug unter Serienbedingungen durchgeführt:

| | |
|---|---|
| Werkzeugtemperatur | 150°C |
| Massetemperatur PPS+SPG40 | 335°C |

Die Dichtheitsprüfung erfolgt als Unterdruckprüfung in einer Standardprüfapparatur. Unter Standardbedingungen konnte dabei kein Abfall des angelegten Unterdruckes festgestellt werden. Bei den derzeit eingesetzten Materialien für den Relaisgrundkörper ist dagegen ein nachträgliches Vergießen des Bauteils (mit einem Duroplastgießharz) notwendig, um im Standardtest die geforderte Dichtheit der Pin-Durchführung sicherzustellen.

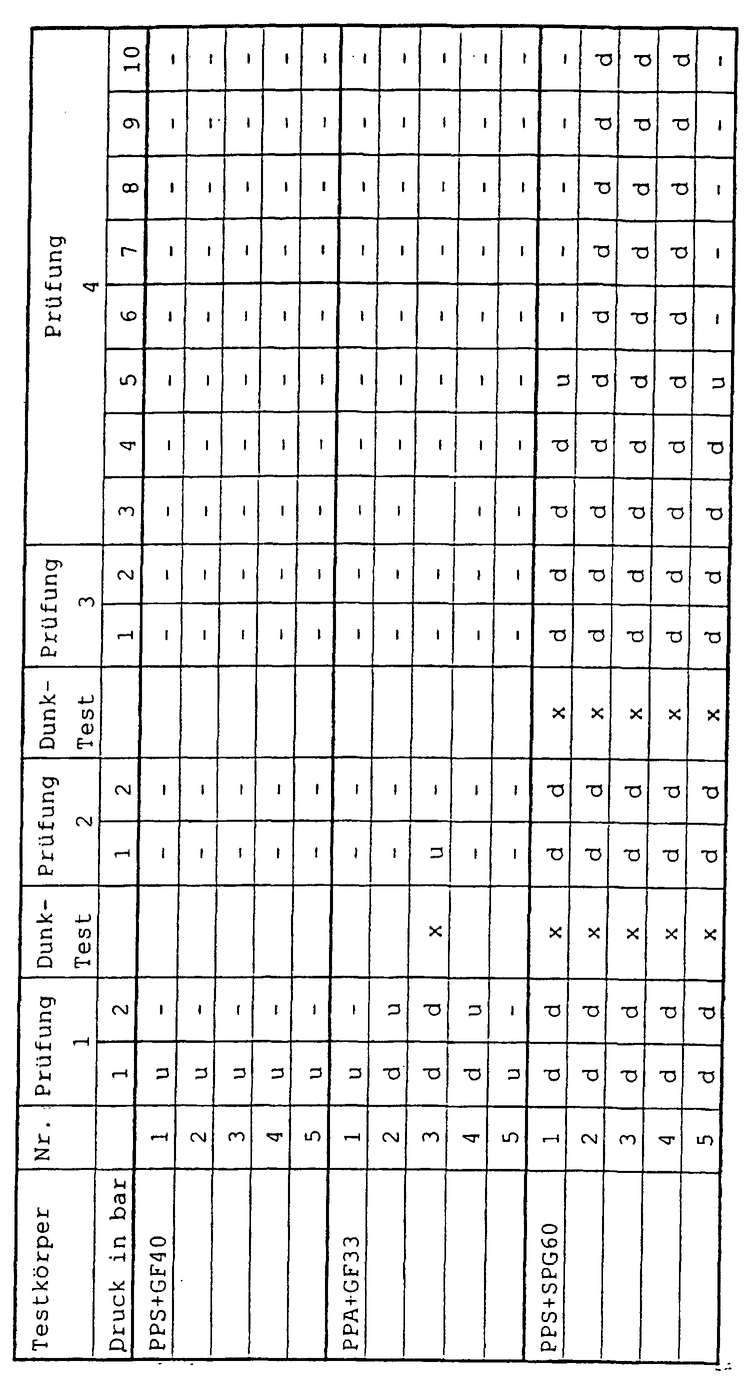

## Patentansprüche

1. Mediendichte Kontaktdurchführungen aufweisende Kunststoffbauteile, **dadurch gekennzeichnet, dass** sie aus einem Glas/Kunststoff-Compound auf Thermoplastbasis bestehen, der
- ein niedrigschmelzendes Sulfophosphatglas folgender Zusammensetzung: 4 bis 10 % Li₂O, 4 bis 10 % Na₂O, 4 bis 8 % K₂O, 1 bis 2 % CaO, 35 bis 37 % ZnO, 0 bis 3 % La₂O₃, 19 bis 22 % P₂O₅ und 19 bis 22 % SO₃ sowie
- einen Hochleistungsthermoplast
enthält.

2. Kontaktdurchführungen nach Anspruch 1, **dadurch gekennzeichnet, dass** der Compound ein Sulfophosphatglas folgender Zusammensetzung enthält: 4,9 % Li₂O, 9,4 % Na₂O, 7,1 % K₂O, 1,6 % CaO, 36,6 % ZnO, 20,0 % P₂O₅ und 20,4 % SO₃.

3. Kontaktdurchführungen nach Anspruch 1 oder 2, **dadurch gekennzeichnet, dass** der Compound als Hochleistungsthermoplast ein Polyetheretherketon, ein Polyetherimid, ein Polyphenylensulfid, ein teilaromatisches Polyamid oder ein flüssigkristallines Polymer enthält.

4. Kontaktdurchführungen nach einem der Ansprüche 1 bis 3, **dadurch gekennzeichnet, dass** der Anteil des Compounds an Sulfophosphatglas 15 bis 80 Gew.-% beträgt, vorzugsweise 25 bis 60 Gew.-%.

5. Verfahren zur Herstellung einer Kontaktdurchführung nach einem der Ansprüche 1 bis 4, bei dem beim Spritzen der Bauteile ein mediendichter Verbund erzeugt wird.

6. Verfahren nach Anspruch 5, bei dem nur ein Material als Werkstoff eingesetzt wird.

7. Verfahren nach Anspruch 5 oder 6, durch das ein Relais, ein Sensor, ein Steckverbinder, ein optoelektronisches Bauelement und/oder eine Pin-Durchführung in einem Relaisgrundkörper und/oder Lead-frames hergestellt wird.

## Claims

1. Plastic component having media-tight contact bushings, **characterized in that** it consists of a thermoplastic-based glass/plastic compound which contains
- a low-melting sulphophosphate glass of the following composition: 4 to 10% of Li₂O, 4 to 10% of Na₂O, 4 to 8% of K₂O, 1 to 2% of CaO, 35 to 37% of ZnO, 0 to 3% of La₂O₃, 19 to 22% of P₂O₅ and 19 to 22% of SO₃, and
- a high-performance thermoplastic.

2. Contact bushing according to Claim 1, **characterized in that** the compound contains a sulphophosphate glass of the following composition: 4.9% of Li₂O, 9.4% of Na₂O, 7.1% of K₂O, 1.6% of CaO, 36.6% of ZnO, 20.0% of P₂O₅ and 20.4% of SO₃.

3. Contact bushing according to Claim 1 or 2,
**characterized in that** the compound contains, as the high-performance thermoplastic, a polyetheretherketone, a polyetherimide, a polyphenylene sulphide, a partly aromatic polyamide or a liquid crystalline polymer.

4. Contact bushing according to any of Claims 1 to 3, **characterized in that** the proportion of the compound in sulphophosphate glass is 15 to 80% by weight, preferably 25 to 60% by weight.

5. Process for the production of a contact bushing according to any of Claims 1 to 4, in which a media-tight bond is produced during the injection moulding of the components.

6. Process according to Claim 5, in which only one material is used as the engineering material.

7. Process according to Claim 5 or 6, by means of which a relay, a sensor, a plug connector, an optoelectronic component and/or a pin bushing in a relay base element and/or a lead frame is produced.

## Revendications

1. Composants plastiques comportant des traversées de contact étanches, **caractérisés en ce qu'**ils sont composés d'un compound verre/plastique à base de thermoplastique contenant
- un verre de sulfophosphate à bas point de fusion de composition suivante : 4 à 10% Li₂O, 4 à 10% Na₂O, 4 à 8% K₂O, 1 à 2 % CaO, 35 à 37 % ZnO, 0 à 3% La₂O₃, 19 à 22% P₂O₅ et 19 à 22% SO₃, ainsi que
- un thermoplastique à haute performance.

2. Traversées de contact selon la revendication 1, **caractérisées en ce que** le compound contient un verre de sulfophosphate de composition suivante : 4,9% Li₂O, 9,4% Na₂O, 7,1% K₂O, 1,6% CaO, 36,6% ZnO, 20,0% P₂O₅ et 20,4% SO₃.

3. Traversées de contact selon la revendication 1 ou 2, caractérisées en ce le compound contient comme thermoplastique à haute performance un polyétheréthercétone, un polyétherimide, un polysulfure de phénylène, un polyamide semi-aromatique ou un polymère à cristaux liquides.

4. Traversées de contact selon l'une des revendications 1 à 3, **caractérisées en ce que** le pourcentage de verre de sulfophosphate du compound est de 15 à 80% en poids, de préférence 25 à 60 % en poids.

5. Procédé de fabrication d'une traversée de contact selon l'une des revendications 1 à 4, dans lequel on produit un composite étanche lors du moulage des pièces par injection.

6. Procédé selon la revendication 5, dans lequel on n'utilise qu'une seule matière comme matériau.

7. Procédé selon la revendication 5 ou 6, permettant de fabriquer un relais, un capteur, un connecteur, un composant optoélectronique et/ou une traversée de broche de connexion dans le corps de base d'un relais et/ou des leadframes.
